# FASCICULE DE BREVET EUROPEEN

(11) **EP 0 520 941 B1**
(45) Date de publication et mention de la délivrance du brevet: **02.12.1998**
(21) Numéro de dépôt: 92810413.2
(22) Date de dépôt: 29.05.1992
(51) Int. Cl.: G02B 6/16, C03C 35/04

(54) **Procédé d'ajustement du point de fonctionnement d'un capteur à microcourbures et dispositif pour sa mise en oeuvre**
Verfahren zum Justieren des Arbeitspunktes eines Mikrowindungen-Sensor und Vorrichtung zu Durchführung
Process for adjusting the operating point of a microbend sensor and apparatus for implementing the same

(30) Priorité: 26.06.1991 CH 1881/91
(43) Date de publication de la demande: 30.12.1992
(73) Titulaire: CENTRE SUISSE D'ELECTRONIQUE ET DE MICROTECHNIQUE S.A., 2007 Neuchâtel (CH)
(72) Inventeur: Falco, Lucien, CH-2088 Cressier (CH)
(74) Mandataire: Patry, Didier Marcel Pierre

(56) Documents cités:
- EP-A- 0 076 575
- EP-A- 0 149 323
- Proceedings of the SPIE, 1989, vol. 1011, p. 166 -172; Conference: Fiber optic sensors III, Hamburg, 21-22 sept. 1988 L. Falco et al.:

## Description

La présente invention se rapporte à un procédé de métallisation superficielle d'une fibre optique, en général, et concerne, plus particulièrement, un procédé d'ajustement delatempérature de fonctionnement d'atténuation minimale d'un capteur à fibre optique à microcourbures et un dispositif pour sa mise en oeuvre.

On connaît déjà par le brevet US 4,846,547, une fibre optique à microcourbures enrobée dans une gaine réalisée dans un premier matériau, ladite gaine étant revêtue d'une couche d'un second matériau. Une telle fibre optique se caractérise par le fait que ladite couche présente deux séries de discontinuités surfaciques périodiques, lesdites séries étant symétriques, par rapport à l'axe de révolution de la fibre, mais décalées de part et d'autre dudit axe de révolution de la fibre; de manière qu'une variation d'un paramètre d'environnement produise des microcourbures de même périodicité que celle desdites discontinuités.

La production de microcourbures le long d'une fibre optique, microcourbures utilisées comme mécanisme de transduction dans les systèmes d'alarme, peut se faire, de façon non limitative, sous l'effet d'une élévation de température ou de pression ou sous l'effet d'une variation des coefficients d'absorption ou de rigidité des matériaux.

Pour obtenir ces fibres optiques à revêtement sensible à un paramètre physique ou chimique déterminé, plusieurs méthodes ou procédés sont connus.

Un procédé connu d'attaque sélective de la gaine métallique d'une fibre optique comporte les étapes suivantes:
. dépôt d'une résine photosensible le long de la fibre optique,
. exposition à travers un masque,
. développement,
. premier rinçage,
. attaque chimique et
. second rinçage.

Le document "Bimorphous distributed transducer temperature threshold sensor," de L. Falco et al., SPIE/Europtica Hambourg, 19- 23 Septembre 1988, montre un tel procédé.

Ce même document montre que du fait de la métallisation de la fibre optique et de l'attaque chimique, pour l'obtention desdites discontinuités périodiques, la température de fonctionnement correspondant aux conditions d'atténuation minimale de l'énergie transmise, dans le cas d'une mesure de température, ne se situe pas à la température ambiante normale du milieu dans lequel se trouve ladite fibre.

En d'autres termes, l'amplitude des microcourbures n'est pas nulle lorsque la fibre optique à microcourbures est à la température ambiante du milieu dans lequel elle se trouve.

Un inconvénient important est qu'en fonctionnement normal, c'est-à-dire lorsque la fibre optique à revêtement est à température ambiante, les pertes dans ladite fibre ne sont pas minimales.

D'autres inconvénients des procédés de métallisation décrits dans l'art antérieur sont:
- une diminution de la dynamique du système incorporant une fibre optique à microcourbures et
- une limitation de la longueur de la fibre pouvant être utilisée.

Aussi un objet de la présente invention est-il un procédé de métallisation d'une fibre optique permettant l'ajustement de la température de fonctionnement d'atténuation minimale d'un capteur à fibre optique à microcourbures.

Un autre objet est un procédé d'ajustement de la température de fonctionnement d'un capteur à fibre optique à microcourbures dans un large domaine de température.

Un autre objet est un procédé d'ajustement de la température de fonctionnement d'un capteur à fibre optique à microcourbures permettant d'obtenir la même sensibilité moyenne de détection le long de la fibre.

Un autre objet est un procédé d'ajustement de la température de fonctionnement d'un capteur à fibre optique à microcourbures permettant l'ajustement du seuil d'alarme en fonction de la précision désirée.

Un autre objet est un dispositif pour la mise en oeuvre du procédé.

Un autre objet est un dispositif pour la mise en oeuvre du procédé permettant d'obtenir la même sensibilité moyenne de détection le long de la fibre.

Les caractéristiques de l'invention sont définies dans les revendications.

Un avantage du procédé d'ajustement de la température de fonctionnement d'une fibre optique à revêtement selon l'invention est de permettre de définir ladite température de fonctionnement d'atténuation minimale, dans un large domaine de température, en ne contrôlant qu'un seul paramètre de fabrication.

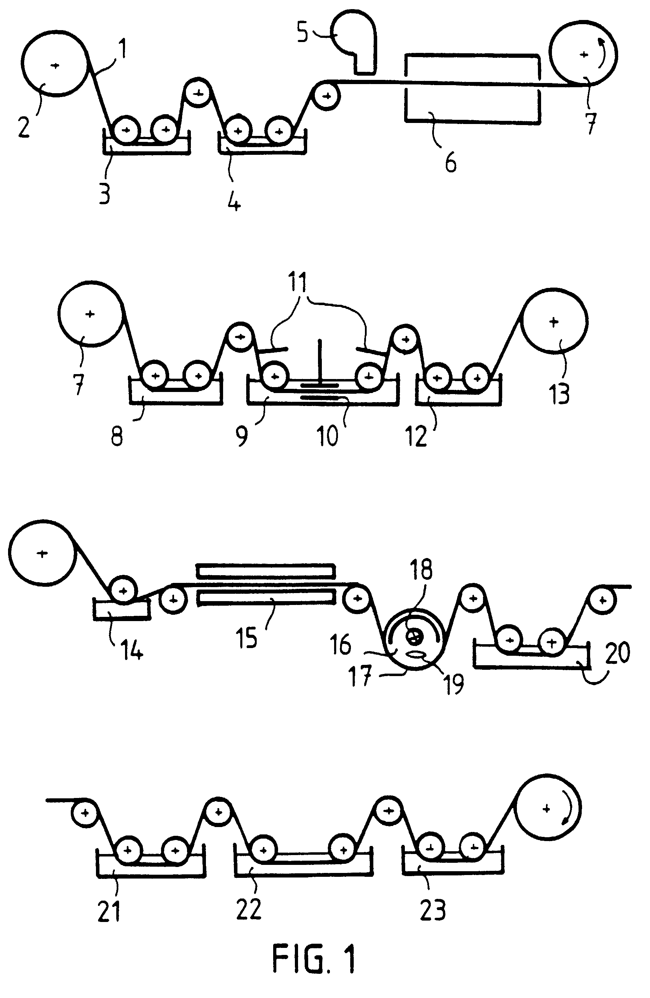

D'autres objets, caractéristiques et avantages de la présente invention apparaîtront à la lecture de la description du procédé de l'invention, description faite à titre purement illustratif, en relation avec la figure 1, laquelle montre un exemple de dispositif pour la mise en oeuvre du procédé de l'invention.

Le procédé selon l'invention sera décrit ci-après dans le cadre d'un procédé de métallisation connu de l'homme du métier. Ce dernier procédé s'applique, par exemple, à une fibre optique à gaine en polyimide mince d'un diamètre proche de 145 µm. Cette fibre est utilisée du fait de l'excellente tenue en température de sa gaine, laquelle peut supporter des températures pouvant varier de -190 °C à +350 °C, de son absence de fluage et de sa facilité de métallisation.

La première phase connue du procédé consiste en un prétraitement visant à préparer la fibre optique devant être métallisée. Cette première phase a pour but de générer une couche métallique, appelée couche d'accrochage, devant permettre une métallisation galvanique de ladite fibre.

Deux étapes principales sont nécessaires. Un exemple de la composition des bains et des principaux paramètres est donné ci-après.
a) Nettoyage par un alcool, par exemple isopropanol, amino-2-éthanol ou tétrahydrofurfurol, ou un bain alcalin, par exemple NaOH environ 5 moles/litres, suivi d'un rinçage. Le but de ce prétraitement est de créer de bonnes conditions d'adhérence pour la métallisation.
b) Dépôt d'une couche métallique d'accrochage. Le métal déposé est de préférence du cuivre (Cu) lequel, du fait de ses propriétés, permet un dépôt galvanique métallique ultérieur aisé. Le dépôt de métal est de préférence réalisé par pulvérisation cathodique, qui convient mieux à une métallisation en continu que les procédés chimiques. Un tel dépôt est, par exemple, décrit dans Handbook of thin film technology, L. Missel, R. Glang, aux éditions Mc Graw-Hill Book Co, New York, Chapitres 3 et 4.

La deuxième phase connue du procédé consiste à métalliser la fibre préalablement revêtue de ladite couche d'accrochage.

Un procédé galvanotechnique connu de l'homme du métier et pouvant être utilisé est décrit au chapitre 5 de la référence citée précédemment.

Le dépôt de la couche métallique peut également s'effectuer par évaporation ou par procédé chimique.

Lors de cette deuxième phase et conformément à l'invention, la fibre est allongée ou étirée sous l'effet d'une force de traction d'une centaine de grammes. A titre d'exemple: pour une force de traction de 60.(9,8.10⁻³)N (60 gf) la température de fonctionnement d'atténuation minimale T₀, se déplace de -40 °C, pour une fibre à gaine en quartz, d'un diamètre de 125 µm et revêtue d'une couche métallique de cuivre.

La fibre optique obtenue est alors rincée dans un bain de rinçage d'eau déionisée.

La troisième phase connue du procédé consiste à réaliser le long de la fibre à revêtement lesdites discontinuités surfaciques périodiques dans la partie métallisée.

Cette troisième phase comporte les étapes suivantes, étapes dans lesquelles un exemple de la composition des bains et des principaux paramètres est donné:
a) Dépôt d'une résine photosensible, par exemple la résine S 1400-17 commercialisée par la société "Shipley Microposit".
b) Séchage au four:
   Température: 85 °C,
   Durée: 4 mn.
c) Exposition au moyen d'une lampe au Xénon (Xe) à travers un masque cylindrique strié entraîné par la fibre. Les stries ont la même périodicité que les discontinuités désirées. La période des discontinuités est liée à la constante de propagation des modes guidés par la fibre de manière que, pour ces modes, l'atténuation (ou le couplage entre modes) provoquée par les microcourbures soit maximum.
d) Développement, des parties de résine photosensible exposées, à l'aide, par exemple, du révélateur AZ 351 commercialisé par la société "Hoechst".
e) Rinçage.
f) Attaque chimique des parties métallisées dépourvues de résine photosensible à l'aide, par exemple, de perchlorure de fer. Température du bain: 50 à 60 °C.
g) Rinçage.

La vitesse de défilement de la fibre, principalement limitée par la durée de séchage de la résine photosensible, est fixée à environ 60 cm/mn. Dans le cas d'une couche métallique d'épaisseur supérieure à 20 µm cette vitesse est réduite à 10 cm/mn.

L'ajustement de la température de fonctionnement selon le procédé de l'invention est possible dans un domaine de température allant de +40 °C à -40 °C. Un tel domaine nécessite d'appliquer à la fibre optique une force de traction de 0 à 120.(9,8.10⁻³)N (0 à 120 gf) pour une fibre à gaine en polyimide d'un diamètre de 125 µm.

La sensibilité de détection est définie par l'épaisseur de la couche de métal, épaisseur parfaitement contrôlée lors du dépôt métallique.

La figure 1 montre un exemple de dispositif pour la mise en oeuvre du procédé selon l'invention. Les modules utilisés dans chaque étape du procédé de l'invention sont décrits ci-après.

La première phase du procédé nécessite l'emploi d'un module de prétraitement **3**, d'un module de rinçage **4**, d'un module de séchage **5** par courant d'air et d'un module de pulvérisation cathodique **6**.

Ledit module de prétraitement permet l'immersion d'une fibre **1**, préalablement bobinée sur une première bobine débitrice **2**, dans un bain adéquate. La fibre rincée puis séchée passe dans le module de pulvérisation cathodique et est enroulée sur une première bobine réceptrice **7**.

La deuxième phase du procédé nécessite l'emploi d'un module d'activation **8**, d'un module de dépôt galvanique **9** et d'un module de rinçage **12**.

Ledit module d'activation est identique au module de prétraitement défini précédemment et permet le nettoyage et l'activation de la surface de la fibre. Par activation il faut entendre la création de conditions physico-chimiques de surface permettant un bon accrochage de la couche métallique.

Ledit module de dépôt galvanique se compose, par exemple, d'une cuve à électrolyte comprenant une anode tubulaire **10** en cuivre, coaxiale à la fibre et une cathode **11** reliée à la fibre par des brosses également en cuivre. La fibre optique se propage donc selon l'axe de symétrie de ladite anode tubulaire.

Ledit module de rinçage est destiné à débarrasser la fibre du produit de traitement. La fibre optique est enroulé sur une seconde bobine réceptrice **13**.

Tout au long de cette deuxième phase et conformément à l'invention, ladite fibre est soumise à une force de traction constante. Pour ce faire, ladite seconde bobine réceptrice est, par exemple, disposée sur un support fixe et mue à l'aide d'un moteur (non représenté). La première bobine réceptrice est ici utilisée comme bobine débitrice et est reliée, par exemple, à un frein réglable (non représenté), lequel permet un ajustement de la force de traction appliquée à la fibre.

La troisième phase du procédé nécessite l'emploi d'un module de dépôt **14** de résine photosensible, d'un four **15**, d'un module d'exposition **16**, d'un module de développement **20**, de deux modules de rinçage **21**, **23** et d'un module d'attaque chimique **22**.

Lesdits modules de dépôt de résine photosensible, de développement et d'attaque chimique sont identiques au module de prétraitement décrit précédemment.

La couche de résine photosensible déposée sur la fibre à l'aide du module de dépôt, est préalablement séchée à l'aide du four.

Ledit module d'exposition comporte un masque cylindrique **17** à l'intérieur duquel est disposé une lampe au xénon **18**. La structure périodique représentant les discontinuités surfaciques devant être obtenues le long de la fibre est reproduite par l'intermédiaire dudit masque. Un condenseur **19** peut être couplé à la lampe afin de focaliser le flux lumineux sur la fibre et sur une surface faible d'environ 5 mm x 5 mm. Le masque cylindrique est entrainé par la fibre elle-même.

La périodicité des discontinuités surfaciques le long de la fibre est définie par le choix du couplage intermodal. La meilleure sensibilité est obtenue en utilisant la première résonance du couplage intermodal.

Cependant, le pic de résonance étant étroit, un décalage constant du pas de la structure périodique provoquée par une erreur, par exemple, de mesure ou de réalisation induit une baisse constante non contrôlée de la sensibilité de la fibre. Aussi, conformément à l'invention, les discontinuités surfaciques le long de la fibre peuvent ne pas avoir un pas constant. Une réalisation consiste à obtenir une structure périodique dont les discontinuités surfaciques ont un pas linéairement croissant en fonction de la position le long de ladite fibre et en ce que cette croissance linéaire est périodique le long de ladite fibre. En d'autres termes, le masque cylindrique n'engendre pas, le long de la fibre, une structure à pas constants mais engendre une suite de rampes identiques. Lesdits pas ont des valeurs réparties autour de la valeur du pas fixé par la résonance choisie, soit autour d'une valeur de 1 à 1,5 µm pour une fibre de diamètre de coeur de 50 µm. Un avantage de cette réalisation est de régulariser la sensibilité le long de toute la fibre.

La sensibilité étant proportionnelle au carré de la température, le comportement du système d'alarme est très favorable puisque les pertes sont faibles à basse température. Cette propriété assure donc une grande dynamique optique.

Le module de développement permet le développement des parties de résine photosensible exposées.

Le module d'attaque chimique permet de supprimer les parties métalliques dépourvues de résine photosensible.

Lesdits modules de rinçage sont identiques à ceux décrits précédemment. La fibre optique est débarrassée du produit de traitement puis du produit d'attaque chimique par immersions successives dans des bains de rinçage.

## Revendications

1. Procédé de fabrication d'un capteur à fibre optique à microcourbures, permettant d'ajuster la température dite point de fonctionnement à laquelle le capteur présente des conditions d'atténuation minimale de l'énergie transmise, ledit procédé comprenant :
- une première phase consistant en un prétraitement d'une fibre optique devant être métallisée qui comprend :
- nettoyage de ladite fibre optique et
- dépôt d'une couche métallique d'accrochage sur ladite fibre optique,
- une deuxième phase consistant à revêtir ladite fibre optique d'une couche métallique, et
- une troisième phase consistant à réaliser le long de ladite fibre, dans sa partie métallisée, des discontinuités surfaciques périodiques, ladite fibre ainsi obtenue constituant ledit capteur,
ladite fibre optique étant soumise, lors de la deuxième phase, à une force de traction constante d'une valeur telle qu'elle permet d'amener ledit point de fonctionnement, correspondant aux conditions d'atténuation minimale de l'énergie transmise, à une valeur spécifiée, correspondant à la température ambiante normale du milieu dans lequel le capteur à fibre optique à microcourbures est destiné à se trouver en fonctionnement normal.

2. Procédé selon la revendication 1, dans lequel les discontinuités surfaciques périodiques réalisées le long de la fibre lors de la troisième phase ont un pas linéairement croissant en fonction de la position le long de ladite fibre et en ce que cette croissance linéaire est périodique le long de ladite fibre.

3. Procédé selon l'une des revendications 1 ou 2, dans lequel la fibre optique est une fibre à gaine mince en polyimide.

4. Procédé selon l'une des revendications 1 à 3, dans lequel la deuxième phase est réalisée par voie galvanique.

5. Procédé selon l'une des revendications 1 à 3, dans lequel la deuxième phase est réalisée par évaporation.

6. Procédé selon l'une des revendications 1 à 3, dans lequel la deuxième phase est réalisée par procédé chimique.

7. Dispositif pour la mise en oeuvre du procédé selon la revendication 1, qui comprend, pour la mise en oeuvre de la phase du procédé consistant à générer le long de la fibre optique préalablement revêtue des discontinuités surfaciques périodiques dans la partie métallisée :
- un module de dépôt de résine photosensible (14) permettant de déposer une couche de résine photosensible le long de la fibre optique,
- un second module de séchage (15) permettant de sécher la couche de résine photosensible,
- un module d'exposition (16) permettant d'exposer la fibre optique à une onde lumineuse à travers un masque cylindrique,
- un module de développement (20) permettant le développement des parties de résine photosensible exposées,
- un premier module de rinçage (21) permettant de débarrasser la fibre du produit de traitement,
- un module d'attaque chimique (22) permettant de supprimer les parties métallisées dépourvues de résine photosensible et
- un second module de rinçage (23) permettant de débarrasser la fibre du produit d'attaque chimique.
lequel dispositif comprend en outre, pour la mise en oeuvre de la phase du procédé consistant en un prétraitement :
- un module de prétraitement (3),
- un module de rinçage (4),
- un premier module de séchage (5) et
- un module de pulvérisation cathodique (6); et
pour la mise en oeuvre de la phase du procédé consistant à métalliser la fibre préalablement revêtue d'une couche d'accrochage :
- un module d'activation (8),
- un module de métallisation de la fibre optique (9),
- un module de rinçage permettant de débarrasser la fibre du produit de traitement (12) et
- un module permettant de soumettre ladite fibre optique à une force de traction constante.

8. Dispositif selon la revendication 7, dans lequel ledit module d'exposition comporte un masque cylindrique (17), reproduisant les discontinuités surfaciques périodiques, à l'intérieur duquel est disposée une source lumineuse (18).

9. Dispositif selon la revendication 8, dans lequel ledit masque cylindrique est réalisé selon au moins une rampe de pas dont les valeurs sont réparties autour de la valeur du pas fixé par la résonance choisie.

## Patentansprüche

1. Verfahren zum Herstellen eines Mikrowindungensensors aus optischer Faser, der es erlaubt, die Temperatur, den Arbeitspunkt, einzustellen, bei der der Sensor die übertragene Energie minimal schwächt, wobei das Verfahren
- eine erste Phase, die in einer Vorbehandlung einer optischen Faser, bevor sie metallisiert wird, besteht, umfassend
- ein Reinigen der optischen Faser und
- ein Aufbringen einer metallischen Haftschicht auf der optischen Faser,
- eine zweite Phase bestehend auf einem Aufbringen einer metallischen Schicht auf die optische Faser und
- eine dritte Phase umfaßt, die darin besteht, daß längs der Faser in ihrem metallisierten Bereich periodische Oberflächendiskontinuitäten realisiert werden, wobei die so erhaltene Faser den Sensor bildet,
wobei die optische Faser während der zweiten Phase einer konstanten Zugkraft einer Größe derart unterworfen wird, daß sie es ermöglicht, den Arbeitspunkt entsprechend den Bedingungen minimaler Schwächung der übertragenen Energie auf einen spezifischen Wert entsprechend der normalen Umgebungstemperatur des Millieus einzustellen, in dem der Mikrowindungensensor aus optischer Faser bestimmt ist, sich bei normalem Betrieb zu befinden.

2. Verfahren nach Anspruch 1, bei dem die längs der Faser während der dritten Phase realisierten periodischen Oberflächendiskontinuitäten einen linear steigenden Abstand als Funktion der Position längs der Faser besitzen und daß die lineare Steigung längs der Faser periodisch ist.

3. Verfahren nach einem der Ansprüche 1 oder 2, bei dem die optische Faser eine Faser mit einer dünnen Umhüllung aus Polyimid ist.

4. Verfahren nach einem der Ansprüche 1 bis 3, bei dem die zweite Phase durch einen galvanischen Weg realisiert wird.

5. Verfahren nach einem der Ansprüche 1 bis 3, bei dem die zweite Phase durch Verdampfung realisiert wird.

6. Verfahren nach einem der Ansprüche 1 bis 3, bei dem die zweite Phase durch ein chemisches Verfahren realisiert wird.

7. Vorrichtung zur Durchführung des Verfahrens gemäß Anspruch 1, die zur Durchführung der Phase des Verfahrens, die darin besteht, längs der vorher beschichteten optischen Faser periodische Oberflächendiskontinuitäten in dem metallisierten Bereich zu erzeugen,
- einen Modul (14) zur Aufbringung von photosensiblem Harz, der es ermöglicht, eine photosensible Harzschicht längs der optischen Faser aufzubringen,
- einen zweiten Modul (15) zum Trocknen, der es ermöglicht, die photosensible Harzschicht zu trocknen,
- einen Modul (16) zum Aussetzen, der es ermöglicht, die optische Faser einer Lichtwelle durch eine zylindrische Maske hindurch auszusetzen,
- einen Modul (20) zum Entwickeln, der es ermöglicht, die belichteten Abschnitte des photosensiblen Harzes zu entwickeln,
- einen ersten Modul (21) zum Spülen, der es ermöglicht, die Faser von Behandlungsprodukten zu befreien,
- einen Modul (22) zum chemischen Angriff, der es ermöglicht, die metallisierten Abschnitte, die von photosensiblem Harz befreit sind, zu entfernen,
- einen zweiten Modul (23) zum Spülen umfaßt, der es ermöglicht, die Faser von Produkten des chemischen Angriffs zu befreien, wobei die Vorrichtung zudem zur Durchführung der Phase des Verfahrens, die in einer Vorbehandlung besteht,
- einen Vorbehandlungsmodul (3),
- einen Spülmodul (4),
- einen ersten Modul zum Trocknen (5) und
- einen Modul (6) zu Kathodenzerstäubung und
zum Durchführen der Phase des Verfahrens, die darin besteht, die vorbehandelte, mit einer Haftschicht beschichtete Faser zu metallisieren,
- einen Aktivierungsmodul (8),
- einen Modul (9) zum Metallisieren der optischen Faser,
- einen Spülmodul (12), der es ermöglicht, die Faser von Behandlungsprodukten zu befreien, und
- einen Modul umfaßt, der es ermöglicht, die optische Faser einer konstanten Zugkraft zu unterwerfen.

8. Vorrichtung nach Anspruch 7, bei der der Belichtungsmodul eine zylindrische Maske (17) umfaßt, die die periodischen Oberflächendiskontinuitäten reproduziert und in deren Inneren eine Lichtquelle (18) angeordnet ist.

9. Vorrichtung nach Anspruch 8, bei der die zylindrische Maske mit wenigstens einer Abstandssteigerung realisiert ist, deren Werte um den durch die gewählte Resonanz fixierten Abstandswert verteilt sind.

## Claims

1. Manufacturing procedure of a microbend optical fibre sensor allowing to adjust the temperature, the so-called operating point, at which the sensor presents minimal attenuation conditions of the transmitted energy, said procedure comprising :
- a first phase consisting of a pre-treatment of an optical fibre which is to be metallised comprising :
- cleaning said optical fibre and
- depositing a coupling metallic layer on said optical fibre,
- a second phase consisting of coating said optical fibre with a metallic layer, and
- a third phase consisting of making periodic surface breaks along the metallic part of said fibre, said fibre thus obtained constituting said sensor, said optical fibre undergoing during the second phase a constant traction force of a value such that it allows to bring said operating point corresponding to the minimal attenuation conditions of the transmitted energy to a specific value corresponding to the normal surrounding temperature of the environment in which the microbend optical fibre sensor is intended to be used during normal operation.

2. Procedure according to claim 1, in which the periodic surface breaks made along the fibre during the third phase have a linearly increasing step as a function of the position along the length of said fibre and in that said linear increase is periodic along the length of said fibre.

3. Procedure according to any one of claims 1 or 2, in which the optical fibre is a thin polyimide sleeved fibre.

4. Procedure according to any one of claims 1 to 3, in which the second phase is made in a galvanic manner.

5. Procedure according to any one of claims 1 to 3, in which the second phase is made by evaporation.

6. Procedure according to any one of claims 1 to 3, in which the second phase is made by a chemical procedure.

7. Device for carrying out the procedure according to claim 1, which comprises for the carrying out of the procedure phase consisting of generating along the length of the precoated optical fibre periodic surface breaks in the metallised part :
- a photosensitive resin depositing module (14) allowing to deposit photosensitive resin coating along the length of said optical fibre,
- a second drying module (15) allowing to dry the photosensitive resin coating,
- an exposition module (16) allowing to expose the optical fibre to a light wave across a cylindrical mask,
- a developing module (20) allowing to develop the exposed photosensitive resin parts,
- a first rinsing module (21) allowing to remove a treatment product from the fibre,
- a chemical etching module (22) allowing to remove the metallic parts not coated with the photosensitive resin, and
- a second rinsing module (23) allowing to remove the chemical etching product from the fibre,
said device further comprising for the carrying out of the phase of the procedure consisting of a pre-treatment :
- a pre-treating module (3),
- a rinsing module (4),
- a first drying module (5), and
- a cathode atomising module (6); and for the carrying out of the phase of the procedure consisting of metallising the fibre which is initially coated with a coupling layer :
- an activating module (8),
- a metallisation module of the optical fibre (9),
- a rinsing module allowing to remove the treatment product (12) from the fibre, and
- a module allowing to submit said optical fibre to a constant traction force.

8. Device according to claim 7, in which said exposition module comprises a cylindrical mask (17), reproducing the periodic surface breaks, at the interior of which is deposited a light source (18).

9. Device according to claim 8, in which said cylindrical mask is made according to at lest a gradient step the values of which are distributed around the value of the step fixed by the chosen resonance.
